# EUROPEAN PATENT SPECIFICATION

(11) **EP 2 122 837 B1**
(45) Date of publication and mention of the grant of the patent: **25.10.2017**
(21) Application number: 07862326.1
(22) Date of filing: 28.11.2007
(51) Int. Cl.: H01Q 5/00, H01Q 9/14, H01Q 5/357

(54) **MULTI-BAND TUNABLE FREQUENCY RECONFIGURABLE ANTENNAS USING HIGHER ORDER RESONANCES**
FREQUENZUMKONFIGURIERBARE ABSTIMMBARE MEHRBANDANTENNE MIT RESONANZEN HÖHERER ORDNUNG
ANTENNES MULTIBANDE POUVANT ÊTRE RECONFIGURÉES À FRÉQUENCE ACCORDABLE UTILISANT UNE RÉSONANCE D'ORDRE SUPÉRIEUR

(30) Priority: 22.12.2006 US 644741
(43) Date of publication of application: 25.11.2009
(73) Proprietor: Intel Corporation, Santa Clara, CA 95054 (US)
(72) Inventor: PAN, Helen, K., Portland, OR 97229 (US); YANG, Songnan, Knoxville, TN 37919 (US); CHOUDHURY, Debabani, Thousand Oaks, CA 91320 (US); NAIR, Vijay, K., Mesa, AZ 85207 (US)
(74) Representative: HGF Limited
(86) International application number: PCT/US2007/024573
(87) International publication number: WO 2008/088463

(56) References cited:
- WO-A1-2004/102737
- JP-A- 2006 086 630
- KR-A- 20060 096 693
- US-A1- 2002 054 495
- US-A1- 2006 097 918
- US-B1- 6 204 819
- US-B1- 6 529 749
- US-B1- 6 529 749
- US-B1- 6 662 028
- US-B1- 6 662 028
- US-B2- 7 136 020

## Description

Recent developments in a number of different digital technologies have greatly increased the need to transfer large amounts of data from one device to another or across a network to another system. Technological developments permit digitization and compression of large amounts of voice, video, imaging, and data information, which may be rapidly transmitted from computers and other digital equipment to other devices within the network. Computers have faster central processing units and substantially increased memory capabilities, which have increased the demand for devices that can more quickly store and transfer larger amounts of data.

To transfer data, mobile wireless devices incorporate Radio Frequency (RF) subsystems to support the multiple frequency ranges that may be needed. The radio subsystems may include a single band antenna, multi-band antenna or broadband antenna. Single band antenna may increase the platform space as more radios are integrated into the platform. Multi-band antenna may limit operation to three or four bands to maintain desirable antenna performance in those bands. The broadband antenna may introduce undesired out of band noise that necessitates RF front end band pass filters. Clearly, the developments in digital technology have stimulated a need to deliver data and improvements in multi-radio subsystems in the same platform are needed.

WO 2004/102737 A1, US 6 529 749 B1 and US 6 662 028 B1 all provide certain disclosures in the field of radio communications.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 is a diagram that illustrates a wireless device and implementation with a multi-band tunable frequency reconfigurable antenna(s) using higher order resonances in accordance with the present invention;
FIG. 2 is a diagram that illustrates an embodiment of the multi-band tunable frequency reconfigurable antenna in accordance with the present invention;
FIGs. 3-5 are diagrams that illustrate characteristics of the multi-band tunable frequency reconfigurable antenna operating in the frequency bands for GSM 850, PCS 1900, GSM 900, DCS 1800 and IMT 2000; and
FIGs. 6-8 are diagrams that illustrate characteristics of the multi-band tunable frequency reconfigurable antenna operating in the frequency bands for WLAN.

It will be appreciated that for simplicity and clarity of illustration, elements illustrated in the figures have not necessarily been drawn to scale. For example, the dimensions of some of the elements may be exaggerated relative to other elements for clarity. Further, where considered appropriate, reference numerals have been repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

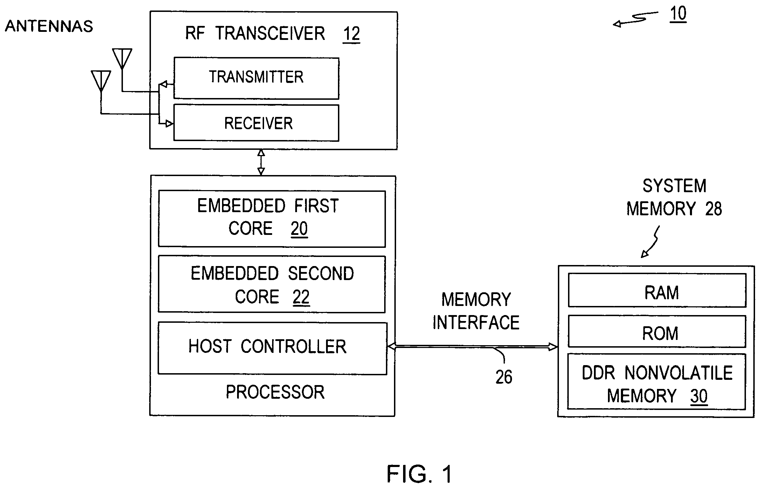

The embodiment illustrated in FIG. 1 shows a wireless communications device 10 that includes one or more radios to allow communication with other devices. Communications device 10 may operate in wireless networks such as, for example, Wireless Fidelity (Wi-Fi) that provides the underlying technology of Wireless Local Area Network (WLAN) based on the IEEE 802.11 specifications, WiMax and Mobile WiMax based on IEEE 802.16-2005, Wideband Code Division Multiple Access (WCDMA), and Global System for Mobile Communications (GSM) networks, although the present invention is not limited to operate in only these networks. The multi-radio subsystem collocated in the same platform of communications device 10 provides the capability of communicating in an RF/location space with the other devices in the network. Accordingly, the advanced mobile platform of communications device 10 includes an antenna(s) that permits adaptive tuning to different frequencies to meet the requirements of the multi-radio platforms.

It should be noted that communications device 10 may have applications in a variety of products. For instance, the claimed subject matter may be incorporated into desktop computers, laptops, smart phones, MP3 players, cameras, communicators and Personal Digital Assistants (PDAs), medical or biotech equipment, automotive safety and protective equipment, automotive infotainment products, etc. However, it should be understood that the scope of the present invention is not limited to these examples.

FIG. 1 illustrates the mobile platform of communications device 10 with a transceiver 12 and antenna to receive and transmit a modulated signal. The figure shows a simplistic embodiment to illustrate the coupling of antenna(s) to the transceiverto accommodate modulation/demodulation. In general, analog front end transceiver 12 may be a stand-alone Radio Frequency (RF) discrete or integrated analog circuit, or transceiver 12 may be embedded with a processor as a mixed-mode integrated circuit where the processor processes functions that fetch instructions, generate decodes, find operands, and perform appropriate actions, then stores results. The processor may include baseband and applications processing functions and utilize one or more processor cores to handle application functions and allow processing workloads to be shared across the cores. The processor may transfer data through an interface 26 to memory storage in a system memory 28 that may include a combination of memories such as a Random Access Memory (RAM), a Read Only Memory (ROM) and a nonvolatile memory, although neither the type of memory, variety of memories, nor combination of memories included in system memory 28 is a limitation of the present invention.

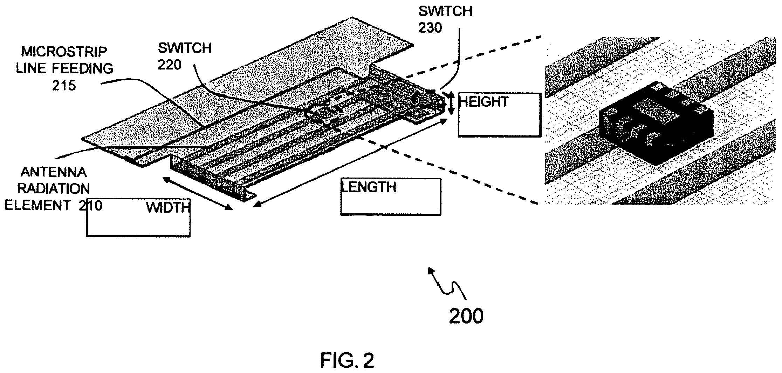

FIG. 2 is a block diagram that illustrates one embodiment of the present invention for a frequency reconfigurable antenna with the flexibility to adaptively meet multi-radio platform requirements. Communications device 10 includes an antenna design that groups adjacent frequency bands together with the following table describing possible band groupings for 3G cellular and WLAN.

**3G Cellular Bands- North America Frequencies Protocol**

| | | |
|---|---|---|
| BAND 1: GSM 850 | TX range: 824 ∼ 849/850 MHz | RX range: 869 ∼ 894 MHz |
| BAND 2: PCS 1900 | TX range: 1850 ∼ 1910 MHz | RX range: 1930 ∼ 1990 MHz |

**3G Cellular Bands- Europe/Asia Frequencies Protocol**

| | | |
|---|---|---|
| BAND 3: GSM 900 | TX range: 880 ∼ 915/900 MHz | RX range: 925 ∼ 960 MHz |
| BAND 4: DCS 1800 | TX range: 1710 ∼ 1785 MHz | RX range: 1805 ∼ 1880 MHz |
| BAND 5: IMT 2000 | TX range: 1920 ∼ 1980 MHz | RX range: 2110 ∼ 2170 MHz |
| | | WCDMA, HSDPA |

**WLAN Bands -Frequencies Protocol**

| | |
|---|---|
| BAND 6: | 2.4 - 2.484 GHz (802.11b/g) |
| BAND 7: | 4.9 - 5.9 GHz (802.11a) |

FIG. 2 shows a bent monopole antenna with an antenna radiation element 210 that may be tuned using two switches, i.e., switch 220 and switch 230, to accommodate the seven frequency bands i n the cellular and WLAN communication systems. The seven cellular and WLAN bands may be divided into two separate groups and switches 220 and 230 may be appropriately switched to provide operation in both frequency band groups. Embodiments of communications device 10 may use this multi-band to multi-band frequency reconfigurable antenna to realize a smaller antenna size and use a fewer number of switches in simplifying the platform integration to achieve a lower manufacturing cost. By choosing differentantenna radiation element widths and shapes, the multiple higher order harmonic resonance modes may be tuned with various ratios as long as the feeding input impedance is close to 50 ohms as shown in FIG. 2 with the 50 ohms microstrip feeding line 215.

Switches 220 and 230 may be placed either on the top or on the bottom of the flexible substrate. Whereas prior art devices typically use switches on the top of the substrate, in accordance with the present invention the switches may also be placed on the bottom of the flexible substrate in order to reduce the height of the switch package. By placing switches 220 and 230 underneath the flexible substrate, the flexible substrate may be placed or embedded inside the mechanical casing of the laptop lid, i.e., the area around the Liquid Crystal Display (LCD) screen. In some embodiments selected areas on the mechanical casing edge may be cut to provide places for the switches. Thus, excess switch package height may be eliminated from the top of the antenna pattern. Note that the switches on the bottom of the antenna substrate may be connected to the antenna metal patterns on the top side of the flexible substrate using vias filled with a metal.

Antenna 200 may be designed to operate in the lowest frequency band and switch to higher frequency operation using RF switches such as, for example, Micro-Electrical-Mechanical (MEM) switches, Field Effect Transistor (FET) switches and PIN diode switches. Antenna 200 may adaptively reconfigure to operate in different frequency bands by using the switches to achieve different electrical lengths and current distributions.

In operation, both switch 220 and switch 230 may be closed to allow antenna 220 to communicate in the five cellular bands listed as GSM 850, PCS 1900, GSM 900, DCS 1800 and IMT 2000. In another switch setting, switches 220 and 230 may both be open to allow antenna 200 to communicate in the WLAN bands denoted by band 6 and band 7. Note thatswitches 220 and 230 may both turn on or turn off at approximately the same time so that one DC switch control line is able to tune reconfigurable antenna 200 to the different multi-band stages.

Again, with switches 220 and 230 both in a closed position communications device 10 is configured to operate in the cellular mode and provide communications at frequencies in the range of 824-960 MHz, BW = 15% to cover GSM850 and 900 bands 1710-2170 MHz, BW = 23.7% to cover DCS/PCS/WCDMA. With switches 220 and 230 both in an open position communications device 10 is configured to operate in the WLAN mode and provide communications at frequencies in the range of 2.4 - 2.48 GHz, BW = 3.5% for 802.11 b/g/n 4.9 - 5.9 GHz, BW = 18.5% to indoor/outdoor 802.11 a/n.

Although FIG. 2 illustrates two RF switches to configure operation of antenna 200 to cover the five cellular bands and the two WLAN bands, it should be pointed out that in some embodiments one switch may be sufficient. However, the second RF switch provides another resonating branch to broaden the bandwidth of the antenna. Note from the figure that the RF packaged switches may be placed on the back of the substrate to reuse the antenna bended height shown in microstrip line 210. Further, the RF switchesmaybe embedded into antenna designs without increasing the dimensions of the antenna.

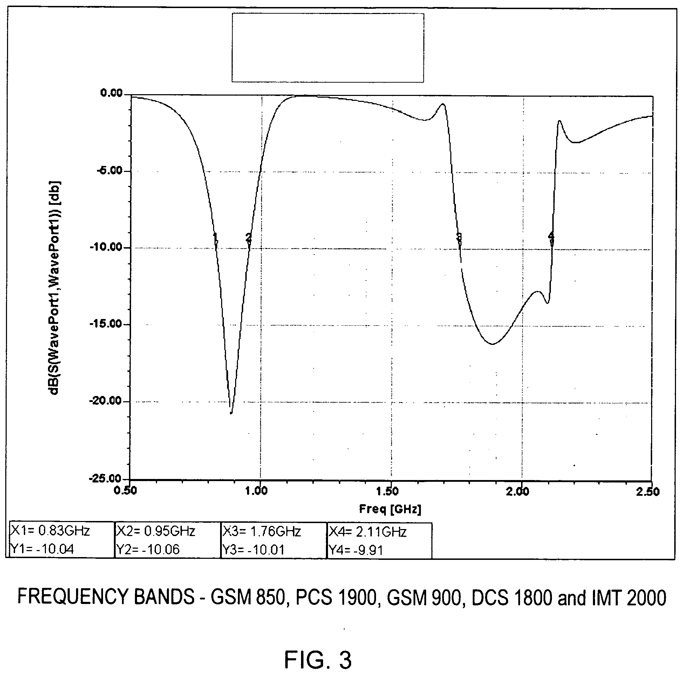

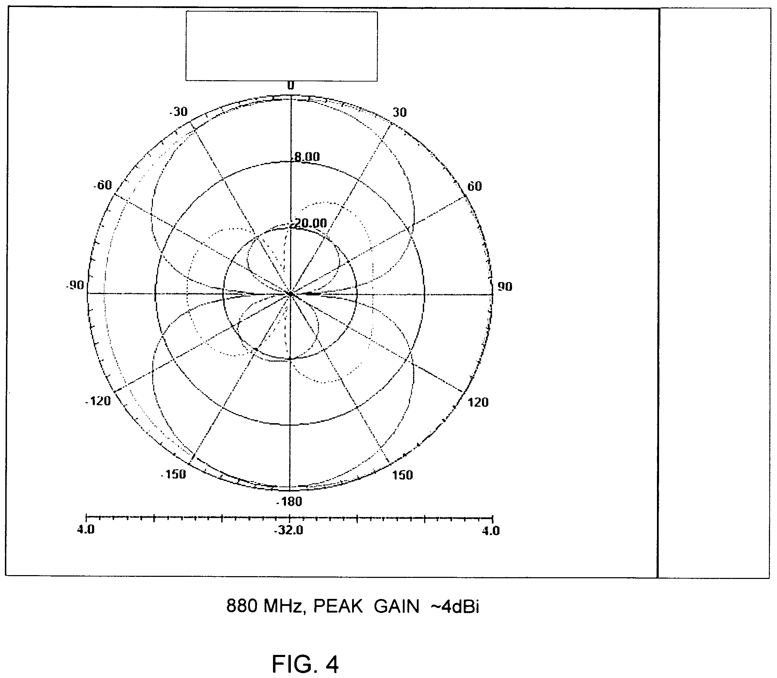

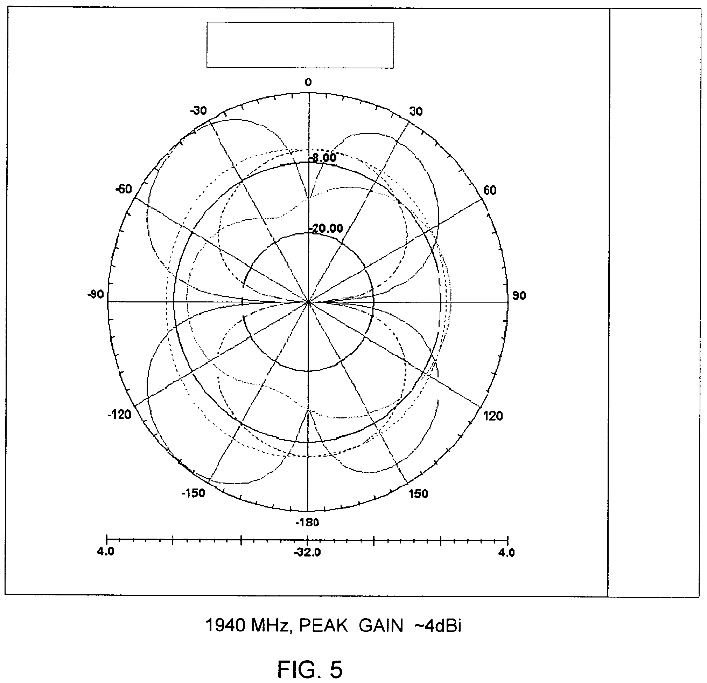

FIGs. 3-5 represent characteristics of the bent monopole antenna 200 with both switches in FIG. 2 in a closed position to allow communication in the five cellular bands listed as GSM 850, PCS 1900, GSM 900, DCS 1800 and IMT 2000. In particular, FIG. 3 shows the simulated return loss in cellular configurations, FIG. 4 shows radiation patterns of the reconfigurable antenna at 880 MHz, peak gain ∼4dBi, and FIG. 5 shows radiation patterns at 1940 MHz, peak gain ∼4dBi.

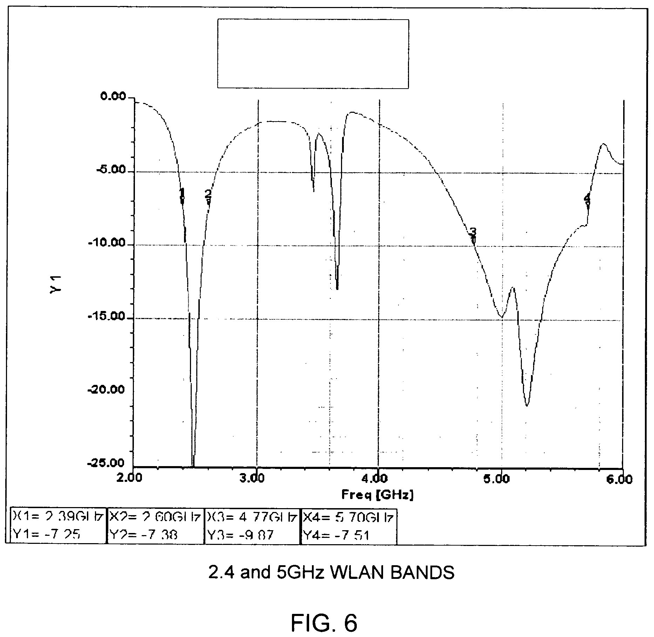

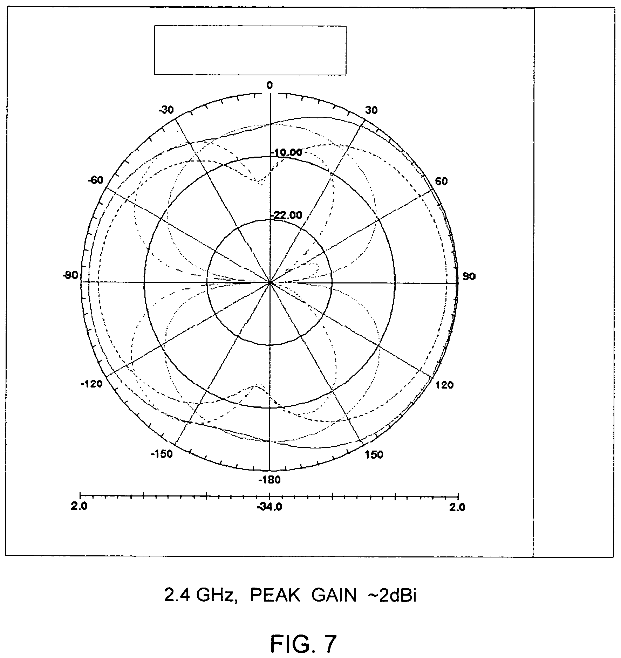

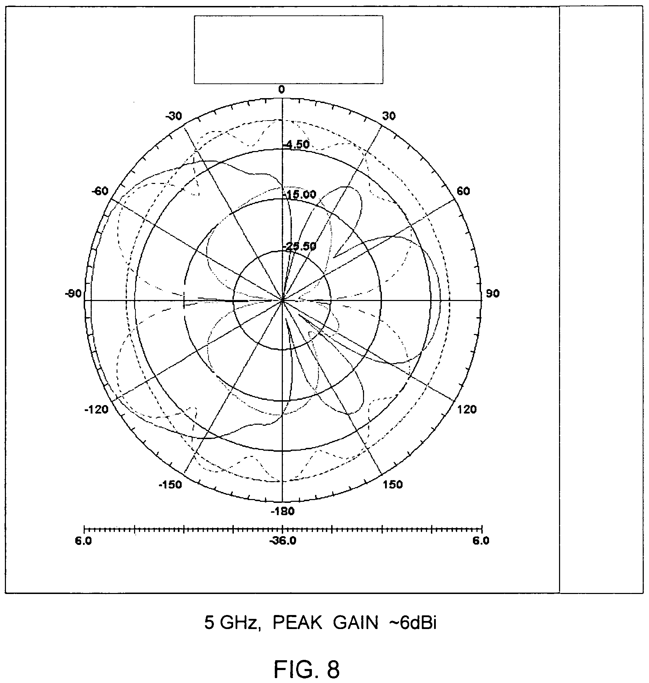

FIGs. 6-8 represent characteristics of the bent monopole antenna 200 with both switches in FIG. 2 in an open position to allow communication in the WLAN bands listed as BAND 6 and BAND 7. In particular, FIG. 6 shows the simulated return loss in the WLAN configurations, FIG. 7 shows radiation patterns of the reconfigurable antenna at 2.4 GHz, peak gain ∼2dBi, and FIG. 8 shows radiation patterns at 5 GHz, peak gain ∼6dBi.

Whereas current MXN platforrrs allocate one antenna or N antennas for Multiple-Input-Multiple-Output (MIMO) systems to predetermined frequency bands, the present invention may integrate more radios into one platform using the multi-band to multi-band frequency reconfigurable antenna. In accordance with the present invention the mobile platform may adaptively tune to different configurations to meet end user requirements and to optimize radio performance in terms of RF interference rejection and ElectroMagnetic Interference and Capabilities (EMI/EMC) assessments. A minimum number of antenna elements may be used to support both MIMO and switch diversity.

By now it should be apparent that a multi -band frequency reconfigurable antenna with a single feeding point may be used to cover the five cellular bands that include GSM 850, PCS 1900, GSM 900, DCS 1800 and IMT 2000 and the two WLAN bands. The inventive reconfigurable antenna may reduce the number of required antennas and the number of associated RF switches while providing tunability that covers the wireless communication frequency bands. The savings in platform space from the reduction in RF switches and RF switch control lines provides a cost-effective multi-radio wireless platform environment.

Thus, by implementing natural higher order harmonics on multi-band reconfigurable antenna designs the antenna higher order resonance is used to build multi-band to multi-band frequency reconfigurable antenna. In these inventive embodiments the multi-band to multi-band frequency reconfigurability may be enabled using switches. Space allocation may be minimized and the number of RF cables through the hinge may be reduced.

While certain features of the invention have been illustrated and described herein, many modifications, substitutions, changes, and equivalents will now occur to those skilled in the art within the scope of the invention as defined by the appended claims.

## Claims

1. A method of communicating using a multi-band frequency reconfigurable bent monopole antenna (200), comprising: tuning an antenna radiation element (210) by placing a first switch (220) and a second switch (230) in a first position to allow the reconfigurable bent monopole antenna (200) to communicate in multiple cellular bands; and tuning the antenna radiation element (210) by placing the first switch and the second switch in a second position to allow the reconfigurable bent monopole antenna (200) to communicate in multiple WLAN bands, wherein the antenna radiation element (210) is provided as a microstrip line, having an antenna bended height, on a top side of a flexible substrate, and wherein the first and second switches are placed on a bottom side of the flexible substrate to reuse the antenna bended height.

2. The method of claim 1 further including switching the first and second switches on or off at approximately a same time.

3. The method of claim 2 further including using one DC switch control line to tune the reconfigurable bent monopole antenna (200) to the multiple cellular bands or to the multiple WLAN bands.

4. The method of claim 1 further including using natural higher order harmonics on the multi-band reconfigurable bent monopole antenna (200) to dynamically adjust the multi-band frequency reconfigurable bent monopole antenna (200).

5. A multi-band tunable frequency reconfigurable bent monopole antenna (200) comprising: first and second switches; and an antenna radiation element (210) adapted to, with the first and second switches in a first position, accommodate multiple cellular frequency bands and, with the first and second switches in a second position, accommodate multiple WLAN frequency bands, wherein the antenna radiation element (210) is provided as a microstrip line, having an antenna bended height, on a top side of a flexible substrate, and wherein the first and second switches and wherein the first and second switches are placed on the bottom side of the flexible substrate to reuse the antenna bended height.

6. The multi-band tunable frequency reconfigurable bent monopole antenna (200) of claim 5 further including: a microstrip feeding line (215) having an input impedance of substantially 50 ohms feeding the antenna radiation element (210) without extra matching requirements.

7. The multi-band tunable frequency reconfigurable bent monopole antenna (200) of claim 5 wherein antenna metal patterns are configured with different widths and shapes which allow multiple higher order harmonic resonance modes to be tuned.

8. The multi-band tunable frequency reconfigurable bent monopole antenna (200) of claim 5 wherein the first and second switches are Field Effect Transistor (FET) switches.

9. The multi-band tunable frequency reconfigurable bent monopole antenna (200) of claim 5 wherein the first and second switches are PIN diode switches.

10. The multi-band tunable frequency reconfigurable bent monopole antenna (200) of claim 5 wherein the first and second switches are Micro-Electrical-Mechanical (MEM) switches.

11. A radio having a reconfigurable bent monopole antenna (200) as claimed in claim 5 further comprising:
one DC switch control line coupled to the first and second switches to substantially switch the first and second switches at a same time to enable the reconfigurable bent monopole antenna (200) to tune to the multiple cellular bands or to the multiple WLAN bands.

12. The radio of claim 11 wherein the DC switch control line and RF signal lines are independent to avoid cross coupling and signal interference.

13. The radio of claim 12, wherein the flexible substrate with the first and second switches is adapted to be arranged inside a mechanical casing of a laptop lid.

## Patentansprüche

1. Verfahren zum Kommunizieren unter Verwendung einer rekonfigurierbaren gebogenen Mehrbandfrequenz-Monopolantenne (200), umfassend: das Abstimmen eines Antennenstrahlungselements (210) durch Bringen eines ersten Schalters (220) und eines zweiten Schalters (230) in eine erste Stellung, um der rekonfigurierbaren gebogenen Monopolantenne (200) ein Kommunizieren in mehreren Mobilfunkbändern zu ermöglichen; und
das Abstimmen des Antennenstrahlungselements (210) durch Bringen des ersten Schalters und des zweiten Schalters in eine zweite Stellung, um der rekonfigurierbaren gebogenen Monopolantenne (200) ein Kommunizieren in mehreren WLAN-Bändern zu ermöglichen, wobei das Antennenstrahlungselement (210) als eine Mikrostreifenleitung mit einer Antennenbiegehöhe auf einer Oberseite eines flexiblen Substrats bereitgestellt wird,
und wobei erster und zweiter Schalter auf einer Unterseite des flexiblen Substrats zum Wiederverwenden der Biegehöhe angeordnet sind.

2. Verfahren nach Anspruch 1, ferner umfassend das Ein- und Ausschalten von erstem und zweitem Schalter etwa zur gleichen Zeit.

3. Verfahren nach Anspruch 2, ferner umfassend das Verwenden einer Gleichstromschalter-Steuerleitung zum Abstimmen der rekonfigurierbaren gebogenen Monopolantenne (200) auf die mehreren Mobilfunkbänder oder die mehreren WLAN-Bänder.

4. Verfahren nach Anspruch 1, ferner umfassend das Verwenden von natürlichen Oberwellen höherer Ordnung auf der rekonfigurierbaren gebogenen Mehrband-Monopolantenne (200) zum dynamischen Anpassen der rekonfigurierbaren gebogenen Mehrbandfrequenz-Monopolantenne (200).

5. Rekonfigurierbare gebogene Mehrband-Abstimmfrequenz-Monopolantenne (200) umfassend: einen ersten und einen zweiten Schalter; und ein zum Aufnehmen von mehreren Mobilfunkfrequenzen mit erstem und zweitem Schalter in einer ersten Stellung und zum Aufnehmen von mehreren WLAN-Frequenzbändern mit erstem und zweitem Schalter in einer zweiten Stellung ausgebildetes Antennenstrahlungselement (210), wobei das Antennenstrahlungselement (210) als eine Mikrostreifenleitung mit Antennenbiegehöhe auf einer Oberseite eines flexiblen Substrats bereitgestellt wird und wobei erster und zweiter Schalter auf der Unterseite der flexiblen Substrats bereitgestellt werden, um die Antennenbiegehöhe wiederzuverwenden.

6. Rekonfigurierbare gebogene Mehrband-Abstimmfrequenz-Monopolantenne (200) nach Anspruch 5, ferner umfassend: eine Mikrostreifen-Versorgungsleitung (215) mit einer Eingangsimpedanz von im Wesentlichen 50 Ohm zum Versorgen des Antennenstrahlungselements (210) ohne zusätzliche Abgleichanforderungen.

7. Rekonfigurierbare gebogene Mehrband-Abstimmfrequenz-Monopolantenne (200) nach Anspruch 5, wobei Antennenmetallmuster mit verschiedenen Breiten und Formen ausgebildet sein, die ein Abstimmen von mehreren harmonischen Resonanzformen höherer Ordnung ermöglichen.

8. Rekonfigurierbare gebogene Mehrband-Abstimmfrequenz-Monopolantenne (200) nach Anspruch 5, wobei erster und zweiter Schalter Feldeffekttransistor(FET)-Schalter sind.

9. Rekonfigurierbare gebogene Mehrband-Abstimmfrequenz-Monopolantenne (200) nach Anspruch 5, wobei erster und zweiter Schalter PIN-Diodenschalter sind.

10. Rekonfigurierbare gebogene Mehrband-Abstimmfrequenz-Monopolantenne (200) nach Anspruch 5, wobei erster und zweiter Schalter mikroelektromechanische Schalter (MEM-Schalter) sind.

11. Funkgerät mit einer rekonfigurierbaren gebogenen Monopolantenne (200) nach Anspruch 5, umfassend:
eine mit erstem und zweitem Schalter gekoppelte Gleichstromschalter-Steuersteuerleitung zum im Wesentlichen Schalten von erstem und zweitem Schalter zu einer gleichen Zeit, um der rekonfigurierbaren gebogenen Monopolantenne (200) ein Abstimmen auf die mehreren Mobilfunkbänder oder auf die mehreren WLAN-Bänder zu ermöglichen.

12. Funkgerät nach Anspruch 11, wobei die Gleichstromschalter-Steuerleitung und Funkfrequenz-Signalleitungen unabhängig sind, um Kreuzkopplung und Signalinterferenzen zu vermeiden.

13. Funkgerät nach Anspruch 12, wobei das flexible Substrat mit erstem und zweitem Schalter ausgebildet ist, in einem mechanischen Gehäuse eines Laptop-Deckels angeordnet zu werden.

## Revendications

1. Procédé de communication à l'aide d'une antenne unipolaire pliée reconfigurable en fréquence multibande (200), comprenant : le réglage d'un élément de rayonnement d'antenne (210) en plaçant un premier commutateur (220) et un second commutateur (230) dans une première position pour permettre à l'antenne unipolaire pliée reconfigurable (200) de communiquer dans des bandes cellulaires multiples, et le réglage de l'élément de rayonnement d'antenne (210) en plaçant le premier commutateur et le second commutateur dans une seconde position pour permettre à l'antenne unipolaire pliée reconfigurable (200) de communiquer dans des bandes WLAN multiples, dans lequel l'élément de rayonnement d'antenne (210) est fourni sous forme de ligne microruban, ayant une hauteur pliée d'antenne, sur un côté de dessus d'un substrat flexible, et dans lequel les premier et second commutateurs sont placés sur un côté de dessous du substrat flexible pour réutiliser la hauteur pliée d'antenne.

2. Procédé selon la revendication 1, comportant en outre la mise sous tension ou hors tension des premier et second commutateurs approximativement en même temps.

3. Procédé selon la revendication 2, comportant en outre l'utilisation d'une ligne de commande de commutateur CC pour régler l'antenne unipolaire pliée reconfigurable (200) sur les bandes cellulaires multiples ou sur les bandes WLAN multiples.

4. Procédé selon la revendication 1, comportant en outre l'utilisation d'une harmonique naturelle d'ordre supérieur sur l'antenne unipolaire pliée reconfigurable multibande (200) pour ajuster dynamiquement l'antenne unipolaire pliée reconfigurable en fréquence multibande (200).

5. Antenne unipolaire pliée reconfigurable en fréquence réglable multibande (200) comprenant : des premier et second commutateurs ; et un élément de rayonnement d'antenne (210) adapté pour, avec les premier et second commutateurs dans une première position, loger des bandes de fréquences cellulaires multiples et, avec les premier et second commutateurs dans une seconde position, loger des bandes de fréquences WLAN multiples, dans laquelle l'élément de rayonnement d'antenne (210) est fourni sous forme de ligne microruban, ayant une hauteur pliée d'antenne, sur un côté de dessus d'un substrat flexible, et dans laquelle les premier et second commutateurs sont placés sur le côté de dessous du substrat flexible pour réutiliser la hauteur pliée d'antenne.

6. Antenne unipolaire pliée reconfigurable en fréquence réglable multibande (200) selon la revendication 5, comportant en outre : une ligne d'alimentation microruban (215) ayant une impédance d'entrée de sensiblement 50 ohms alimentant l'élément de rayonnement d'antenne (210) sans exigences de concordance supplémentaires.

7. Antenne unipolaire pliée reconfigurable en fréquence réglable multibande (200) selon la revendication 5, dans laquelle des diagrammes d'antenne en métal sont configurés avec des largeurs et des formes différentes qui permettent de régler de multiples modes de résonnance d'harmonique d'ordre supérieur.

8. Antenne unipolaire pliée reconfigurable en fréquence réglable multibande (200) selon la revendication 5, dans laquelle les premier et second commutateurs sont des commutateurs à transistor à effet de champ (FET).

9. Antenne unipolaire pliée reconfigurable en fréquence réglable multibande (200) selon la revendication 5, dans laquelle les premier et second commutateurs sont des commutateurs à diodes PIN.

10. Antenne unipolaire pliée reconfigurable en fréquence réglable multibande (200) selon la revendication 5, dans laquelle les premier et second commutateurs sont des commutateurs micro-électriques-mécaniques (MEM).

11. Radio ayant une antenne unipolaire pliée reconfigurable (200) selon la revendication 5, comprenant en outre :
une ligne de commande de commutateur CC couplée aux premier et second commutateurs pour commuter sensiblement les premier et second commutateurs en même temps pour permettre à l'antenne unipolaire pliée reconfigurable (200) de se régler sur les multiples bandes cellulaires ou sur les multiples bandes WLAN.

12. Radio selon la revendication 11, dans laquelle la ligne de commande de commutateur CC et des lignes de signaux RF sont indépendantes pour éviter un couplage parasite et une interférence de signal.

13. Radio selon la revendication 12, dans laquelle le substrat flexible avec les premier et second commutateurs est adapté pour être agencé à l'intérieur d'un boîtier mécanique d'un couvercle d'ordinateur portable.
